(19) Europäisches Patentamt
European Patent Office
Office européen des brevets

(11) **EP 4 621 088 A1**

(12) **EUROPEAN PATENT APPLICATION**
published in accordance with Art. 153(4) EPC

(43) Date of publication:
**24.09.2025  Bulletin 2025/39**

(21) Application number: **23891379.2**

(22) Date of filing: **02.11.2023**

(51) International Patent Classification (IPC):
**C22C 1/05** (2006.01)    **C22C 1/02** (2006.01)
**C22F 1/00** (2006.01)    **C22F 1/10** (2006.01)

(52) Cooperative Patent Classification (CPC):
**C22C 1/02; C22C 19/05; C22F 1/00; C22F 1/10;
Y02P 10/20**

(86) International application number:
**PCT/JP2023/039670**

(87) International publication number:
**WO 2024/106226 (23.05.2024 Gazette 2024/21)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **14.11.2022  JP 2022181986**

(71) Applicant: **NIPPON YAKIN KOGYO CO., LTD.
Chuo-ku
Tokyo 104-0031 (JP)**

(72) Inventor: **KOBAYASHI, Yuusuke
Kawasaki-shi, Kanagawa 210-0861 (JP)**

(74) Representative: **Eisenführ Speiser
Patentanwälte Rechtsanwälte PartGmbB
Gollierstraße 4
80339 München (DE)**

(54) **NI-CU ALLOY WITH EXCELLENT SURFACE PROPERTIES AND PRODUCTION METHOD THEREFOR**

(57)    By reducing non-metallic inclusions having an influence on surface properties and by controlling composition, Ni-Cu alloys having excellent surface properties and their production methods are provided. The Ni-Cu alloy consists, in mass%, C: 0.01 to 0.20%, Si: 0.01 to 0.5%, Mn: 0.01 to 2%, P: not greater than 0.03%, Cu: 28 to 40%, Cr: 0.01 to 1%, Fe: 0.3 to 3%, Al: 0.01 to 0.5%, Ti: 0.01 to 0.40%, N: not greater than 0.010%, Mg: 0.005 to 0.04%, Ca: 0.0005 to 0.04%, O: 0.0003 to 0.005%, S: 0.0001 to 0.002%, Ni and inevitable impurities as a remainder, and mass concentrations of Ti, N and C satisfy the following formula.

$$[\%Ti] \times ([\%N] + 1/100 \times [\%C]) < 0.0003$$

Fig. 1

EP 4 621 088 A1

**Description**

Technical Field

The present invention relates to Ni-Cu alloys having excellent surface properties and their production methods.

Background Art

Ni-Cu alloys, such as Monel (containing approximately 65% Ni and approximately 30% Cu by mass%), are used in applications requiring high corrosion resistance, such as eyeglass frames, heat exchange equipments, and coating materials for marine structures, and therefore excellent surface properties are required. If there is damage on the surface of alloy plate, corrosion will progress therefrom, so in order to maximize the corrosion resistance of the alloy, it is necessary to minimize such damage as much as possible.

In actual Ni-Cu alloys, in addition to Ti(N,C) carbonitrides that easily aggregate and combine to form large clusters, $MgO \cdot Al_2O_3$ oxide type non-metallic inclusions are generated, which cause linear surface defects on the surface after rolling. In particular, Ti(N,C) adheres to, deposits, and falls off inner walls of an immerse nozzle in continuous casting and a pouring nozzle in conventional ingot casting, resulting in serious surface defects. Various corrosion tests have shown that corrosion progresses significantly from the surface defects being an origin point, resulting in product defects. When such surface defects occur, grinding is required to ensure excellent surface properties, which significantly reduces the yield. Since Ni and Cu, which are the main raw materials of Ni-Cu alloys, are extremely expensive metals compared to Fe and Cr, it is very important to improve the yield and reduce production costs. In view of such circumstances, there is a demand for Ni-Cu alloys that have excellent surface properties after casting with minimal grinding.

A technique is disclosed for reducing surface defects caused by non-metallic inclusions for Ni-Cr-Mo-Nb alloys in order to fully utilize corrosion resistance of highly corrosion-resistant alloys (For example, see Patent Document 1). The technique for Ti-containing Fe-Cr-Ni alloys with excellent surface properties is also disclosed (For example, see Patent Documents 2 to 4). TiN nitrides are the cause of defects since Ti is contained in all alloy types, and methods for improving by optimizing the components and slag composition have been provided. In Ni-based alloys, a technique for rendering non-metallic inclusions harmless and reducing non-metallic inclusions that form surface defects is provided by controlling the slag composition and further controlling the concentrations of minor elements such as Mg, Ca, and O in the alloy (For example, see Patent Documents 5 and 6). However, the above alloy types are significantly different from Ni-Cu alloys in terms of components, and the morphology and composition of the non-metallic inclusions to be controlled are also different, so it is very difficult to produce Ni-Cu alloys with excellent surface properties by applying these prior art techniques.

As a method for improving the surface properties of Ni-Cu alloys, a method is disclosed in which bulged surface defects caused by gas defects and ultrasonic flaw detection failures are improved by adding a small amount of Ti; however, this method is not applicable to improving the surface defects that are the technical problem of the present invention (For example, see Patent Document 7). In addition, in order to obtain Ni-Cu alloys with good surface qualities and excellent hot workability, a refining method is disclosed for precisely controlling concentrations of Mg, Ca, O and S in the alloy by adjusting slag composition (For example, see Patent Document 8). This is a technique that aims to reduce the S concentration which deteriorates hot workability, and further to improve hot workability by bonding and fixing Ca and Mg with S; however, it is not applicable to improving the surface defects that are the technical problem of the present invention. In other words, the problem of surface properties caused by non-metallic inclusions in Ni-Cu alloys remains.

The Patent Documents are as follows:

Patent Document 1: Japanese Patent Publication No. 6937190
Patent Document 2: Japanese Unexamined Patent Application Publication No. 2003-147492
Patent Document 3: Japanese Patent Publication No. 4542079
Patent Document 4: Japanese Patent Publication No. 6791711
Patent Document 5: Japanese Patent Publication No. 7015410
Patent Document 6: Japanese Patent Publication No. 6990337
Patent Document 7: Japanese Unexamined Patent Application Publication No. Heisei 8 (1996)-120375
Patent Document 8: Japanese Unexamined Patent Application Publication No. 2009-114544

Summary of Invention

In view of the above problems, the present invention provides Ni-Cu alloys in which surface properties are excellent by reducing non-metallic inclusions having influence on the surface properties and by controlling composition, and their production methods.

The inventors have researched and investigated in order to solve the above problems. First, linear surface defects observed on the surface of Ni-Cu alloy plates produced using an actual equipment were collected and analyzed in detail using a scanning electron microscope (SEM) and an energy dispersive X-ray spectrometer (EDS). As a result, non-metallic inclusions of Ti (N, C) were detected in the majority of the surface defects. Furthermore, a more detailed investigation revealed that non-metallic inclusions of MgO·Al$_2$O$_3$ were detected in some of the surface defects.

Furthermore, detailed investigations of each process in actual operation revealed that when surface defects were detected, Ti (N, C) inclusions in molten alloy were noticeably adhered and deposited on inner wall of an immerse nozzle that poured the alloy from a tundish into a mold during continuous casting process. It was also found that some of the Ti (N, C) inclusions clusters fell off during casting and were carried into the mold, where they were captured by solidified shell and remained until the subsequent rolling process, causing linear surface defects. It was also found that these phenomena were similar in conventional ingot casting, where adhesion, deposition and falling off occurred on inner wall of a pouring nozzle of a ladle, causing surface defects. Therefore, it was found that preventing the formation of Ti (N, C) inclusions is extremely effective in preventing linear surface defects, and that to achieve this, it is necessary to control the concentrations of minor amounts of Ti, N and C to be within a specified range.

In addition to Ti(N,C), MgO·Al$_2$O$_3$ inclusions, which are some of the causes of surface defects, tend to aggregate and combine to form clusters in the molten alloy. Therefore, it was found that MgO·Al$_2$O$_3$ clustered during casting is captured by the solidified shell, resulting in linear surface defects. It was found that the slag composition in the secondary refining process is controlled to generate mainly one or more types of inclusions selected from CaO-CaS, MgO-MgS, and CaO-MgO-CaS-MgS types, which are less likely to aggregate and combine, and that the number ratio of these to the total number of non-metallic inclusions is not less than 85%, to achieve improvement in the surface defects caused by the formation of these inclusions. Based on the above knowledges, the present invention was completed.

That is, the aspect of the Ni-Cu alloy of the present invention consists of, in mass%, C: 0.01 to 0.20%, Si: 0.01 to 0.5%, Mn: 0.01 to 2%, P: not greater than 0.03%, Cu: 28 to 40%, Cr: 0.01 to 1%, Fe: 0.3 to 3%, Al: 0.01 to 0.5%, Ti: 0.01 to 0.40%, N: not greater than 0.010%, Mg: 0.005 to 0.04%, Ca: 0.0005 to 0.04%, O: 0.0003 to 0.005%, S: 0.0001 to 0.002%, Ni and inevitable impurities as a remainder, and mass concentrations of Ti, N and C satisfy the following formula.

$$[\%Ti] \times ([\%N] + 1/100 \times [\%C]) < 0.0003$$

In the Ni-Cu alloy of the present invention, it is desirable that ratio of non-metallic inclusions of at least one kind selected from CaO-CaS type, MgO-MgS type, CaO-MgO-CaS-MgS type oxysulfides occupying with respect to the entire of non-metallic inclusions contained in the Ni-Cu alloy is not less than 85% in number ratio.

Furthermore, the present invention also provides a method for production of the above-mentioned Ni-Cu alloy having excellent surface properties, including steps of: melting raw materials in an electric furnace; blowing oxygen in AOD and/or VOD in secondary refining so as to control C and N concentrations; adding Ti; adding lime, fluorite, Si and/or Al so as to generate CaO-Al$_2$O$_3$-SiO$_2$-MgO-F type slag having slag composition of, in mass%, CaO: 50 to 75%, Al$_2$O$_3$: 5 to 25%, SiO$_2$: 1 to 10%, MgO: 2 to 15%, F: 1 to 15%; performing deoxidation and desulfurization with stirring using the slag so as to control O and S concentrations; producing slab or ingot by continuous casting or conventional ingot casting; forming slab by hot forging in a case in which ingot is produced; and performing hot rolling.

Effects of Invention

According to the Ni-Cu alloys and their production methods provided by the technique of the present invention, Ti (N, C), and further MgO·Al$_2$O$_3$ inclusions which cause surface defects are prevented from generating and harmless non-metallic inclusions are generated mainly, so that the Ni-Cu alloys having excellent surface properties are obtained.

Brief Description of Drawing

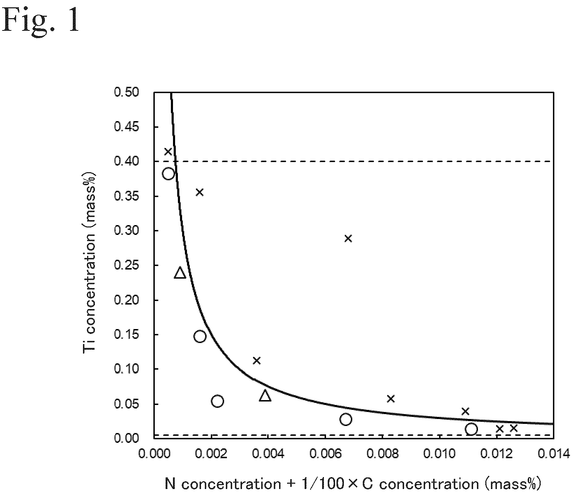

Fig. 1 is a graph showing influences of Ti concentration, N concentration and C concentration on surface qualities in the present invention.

Embodiments of Invention

First, reasons for limiting the chemical components of the Ni-Cu alloy of the present invention are shown. It should be noted that the following percentages refer to mass%.

C: 0.01-0.20%

Since it has effect of increasing alloy strength through solid solution strengthening, it is an element necessary for ensuring strength at room temperature and high temperatures. Sufficient strength cannot be obtained if the C concentration is less than 0.01%. However, since C is concentrated among dendrites during solidification, that is, microsegregation is prominent, serious vertical cracks will occur in continuous cast slabs and ordinary cast ingots if the concentration is higher than 0.20%, and in the worst case, it will cause a molten metal leak during casting, known as a breakout. Therefore, in the present invention, the content is set to be at 0.01-0.20%. It is desirably 0.02-0.19%. The concentration is controlled to be within the specified range by removing C mixed in from the raw materials by oxygen blowing (oxidation refining) in the secondary refining. If the content falls below the specified range, it may be adjusted by adding a C source such as anthracite.

Si: 0.01 to 0.5%

Si is an important element in the present invention. It contributes to deoxidation and controls the oxygen concentration to be at 0.0003 to 0.005%. Furthermore, it has a role to adjust the Mg concentration and Ca concentration in the alloy to be at 0.005 to 0.04% and 0.0005 to 0.04 %, respectively. This is by the following reaction formula.

$$2(MgO) + \underline{Si} = 2\underline{Mg} + (SiO_2) \qquad \cdots (1)$$

$$2(CaO) + \underline{Si} = 2\underline{Ca} + (SiO_2) \qquad \cdots (2)$$

Here, element in brackets indicates component in slag and element with underline indicates component in molten alloy. Oxygen concentration may be high being greater than 0.005% if Si concentration is less than 0.01%. On the other hand, the oxygen concentration may be low being less than 0.0003% if the Si concentration is greater than 0.5%, and reactions indicated by the above formulae (1) and (2) may be further promoted. Accompanied by this, Mg concentration may be greater than 0.04% and at the same time, Ca concentration may be greater than 0.04%. Therefore, Si concentration is set to be 0.01 to 0.5%. It is desirably 0.03 to 0.45%.

Mn: 0.01 to 2%

Since Mn is an austenitic phase stabilizing element which is more inexpensive than Ni and Cu, not less than 0.01% is added. However, oxidation resistance may be deteriorated if a large amount of Mn is added, the upper limit is set to be 2%. It is desirably 0.05 to 1.8%.

P: Not greater than 0.03%

Since P is a harmful element which segregates at grain boundary and generates hot processing crack, it is desirable to reduce as much as possible. It is limited to not greater than 0.03%. It is desirably not greater than 0.025%.

Cu: 28 to 40%

Since Cu is an element which is effective to improve sulfuric acid corrosion resistance and corrosion resistance in chloride environment such as marine water, it is necessary to add not less than 28% in Ni-Cu alloy. It should be noted that since segregation between dendrites, that is, microsegregation, becomes prominent during casting and serious vertical cracks occur in continuous casted slabs and conventional casted ingots if Cu is added at greater than 40%, the Cu concentration is set to be 28 to 40%. It is desirably 29 to 38%.

Cr: 0.01 to 1%

Since Cr is an element which improves oxidation resistance by forming oxidation film at high temperatures, it is added not less than 0.01%. However, Cr carbides may be precipitated at grain boundary and cause grain boundary corrosion if it is added at a large amount, the upper limit is set to be 1%. It is desirably 0.01 to 0.7%.

Fe: 0.3 to 3%

Since Fe is an element which strengthens Ni-Cu alloys by solid-solution, it is added at not less than 0.3%. However, corrosion resistance may be deteriorated if it is added at large amount, the upper limit is set to be 3%. It is desirably 0.5 to 2.5%.

Al: 0.01 to 0.5%

Al is an effective element for deoxidation and desulfurization, and an important element in the present invention. It has a role to adjust oxygen concentration and S concentration at 0.0003 to 0.005% and 0.0001 to 0.002%, respectively. Furthermore, it also has a role to adjust Mg concentration and Ca concentration in alloys at 0.005 to 0.04% and 0.0005 to 0.04%, respectively. This is by the following reaction formula.

$$3(MgO) + 2\underline{Al} = 3\underline{Mg} + (Al_2O_3) \qquad \cdots(3)$$

$$3(CaO) + 2\underline{Al} = 3\underline{Ca} + (Al_2O_3) \qquad \cdots(4)$$

Deoxidation may not be promoted and oxygen concentration may be high being greater than 0.005% if the Al concentration is less than 0.01%. Furthermore, S concentration may also be high being greater than 0.002%. On the other hand, Mg concentration may be high being greater than 0.04% and Ca concentration may be high being greater than 0.04% by the reactions indicated by the above formulae (1) and (2) if Al concentration is greater than 0.5%. Therefore, the Al concentration is set to be 0.01 to 0.5%. It is desirably 0.02 to 0.48%.

Ti: 0.01 to 0.40%

Since Ti is an element which generates fine precipitates such as TiC at grain boundary and improves strength of alloys, it is necessary to add not less than 0.01%. However, if it is added at greater than 0.40%, serious vertical cracks occur in continuous casted slabs and conventional casted ingots since segregation between dendrites, that is, microsegregation, becomes prominent during casting. It is desirably 0.01 to 0.38%.

N: Not greater than 0.010%

N is an element which is inevitably mixed in from the atmosphere, and it combines Ti and C in Ni-Cu alloy to generate non-metallic inclusions of Ti (N, C) carbonitrides. Since this aggregates easily, adheres on the inner wall of the immerse nozzle, falls off, and becomes origin of surface defects, it is necessary to reduce the N concentration as much as possible. Since processing crack may occur from blow hole by $N_2$ gas being as an origin point if it is greater than 0.010%, it is limited to not greater than 0.010%. By removing N which is mixed in from the atmosphere by oxygen blowing in secondary refining, it can be reduced to the defined range.

Mg: 0.005 to 0.04%

Mg is a necessary element in order to generate inclusions of MgO-MgS type and CaO-MgO-CaS-MgS type oxysulfides and in order to react with S which deteriorates hot workability during solidifying in casting process so as to fix it as fine MgS. Therefore, it is necessary not less than 0.005% in order to obtain these effects. On the other hand, intermetallic compounds of Ni-Mg type having low melting points may be generated and hot workability may be deteriorated if it is contained at an excessively large amount. Therefore, the Mg concentration is defined 0.005 to 0.04%. This addition is adjusted by the reactions of the above formulae (1) to (4), or by addition of sub-raw materials such as Ni-Mg alloys.

Ca: 0.0005 to 0.04%

Ca is a necessary element in order to generate inclusions of CaO-CaS type and CaO-MgO-CaS-MgS type oxysulfides and in order to react with S which deteriorates hot workability during solidifying in casting process so as to fix it as fine CaS. Therefore, it is necessary not less than 0.0005% in order to obtain these effects. On the other hand, blow hole defects may be generated by Ca vapor during welding of a product and quality of welded part may be deteriorated if it is contained at an excessively large amount. Therefore, Ca concentration is defined 0.0005 to 0.04%. This addition is adjusted by the reactions of the above formulae (1) to (4), or by addition of sub-raw materials such as Ca-Si alloys.

O: 0.0003 to 0.005%

If oxygen concentration is high being greater than 0.005%, desulfurization may not be promoted much, S concentration may be high being greater than 0.002%, and hot workability may be deteriorated. On the other hand, if it is too low being less than 0.0003%, the reactions of the above formulae (1) to (4) may be promoted excessively, Mg may be high being greater than 0.04%, and Ca may also exceed 0.04%. Therefore, it is limited to 0.0003 to 0.005%. This control is realized by the above Si and Al concentrations.

S: 0.0001 to 0.002%

S is a harmful element which segregates at grain boundary to form low-melting point compounds, and causes hot crack or the like during processing. Adjustment of the S concentration by desulfurization in the secondary refining is realized by controlling Al to be 0.01 to 0.5% and controlling slag composition to the specified range of the present invention. This is by the following reaction formula.

$$3\underline{S} + 2\underline{Al} + 3(CaO) = 3(CaS) + (Al_2O_3) \qquad \cdots(5)$$

Hot rolling crack may occur if the S concentration is high being greater than 0.002%. Furthermore, if it is less than 0.0001%, CaS and MgS cannot be generated by reaction with Ca and Mg in molten alloy.

Next, a reason is explained, why it was found that Ti, N and C mass concentrations in the Ni-Cu alloy of the present invention should satisfy the following formula (6).

$$[\%Ti] \times ([\%N] + 1/100 \times [\%C]) < 0.0003 \qquad \cdots(6)$$

Here, [%Ti], [%N], and [%C] indicate mass% of Ti, N, and C, respectively, in the Ni-Cu alloy.

As explained so far, as a result of inventors' investigation in detail with respect to relationship between linear surface defects which are generated on Ni-Cu alloy plate and actual operating conditions, Ti(N, C) inclusions were detected in a large part of surface defects. Then, they found that it was extremely effective to prevent surface defects if the inclusions were prevented from generating, and to achieve this, it was necessary to control fine amounts of Ti, N and C component concentrations to satisfy the formula (6). According to the conventional knowledge (For example, the Patent Document 2), reaction which generates TiN which easily aggregates and forms clusters in molten alloy during casting is basically based on the following reaction formula.

$$TiN = \underline{Ti} + \underline{N} \qquad \cdots(7)$$

$$K/f_{Ti}/f_N = [\%Ti]\,[\%N] \qquad \cdots(8)$$

Here, K is an equilibrium constant in the chemical reaction formula (7), $f_{Ti}$ and $f_N$ are activity coefficients of Ti and N, respectively (See "THERMODYNAMIC DATA FOR STEEL MAKING, the Japan Society for the Promotion of Science, the 19th Committee on Steelmaking, Tohoku University Press, (2010)). The formula (8) indicates a relationship of inverse proportion in the Ti and N concentrations. That is, in a case in which this relationship is shown by a graph, it means that TiN may be generated in a composition range higher than concentration curve and Ti and N may dissolve in alloy in a composition range lower than the concentration curve. It is necessary to control the Ti and N concentrations to be lower than the curve in order to prevent TiN from generating. However, since the surface defects in Ni-Cu alloy in the problem of the present invention may also occur by Ti(N, C), C having high affinity with Ti should also be considered as same as N. In addition, since Ti(N, C) which was detected in the defects was considered to be a solid solution, not a two-phase separation of TiN and TiC from analysis by SEM-EDS, the inventors considered that the Ti, N and C concentrations associated each other. Then, as a result of analysis in detail of relationship among concentrations of molten alloy components in an actual casting operation, generation of Ti(N, C) and surface defects in light of the above, it was found that the concentrations of Ti, N and C components were controlled to satisfy the formula (6) so that Ti(N, C) could be prevented from generating, which is very effective for preventing surface defects on the Ni-Cu alloy plate.

In addition, in the present invention, it is desirable that ratio of non-metallic inclusions (it can be simply referred to as inclusions) of at least one kind selected from CaO-CaS type, MgO-MgS type, CaO-MgO-CaS-MgS type oxysulfides occupying with respect to the entire of non-metallic inclusions is not less than 85% in number ratio.

As an inclusions which can exist in the Ni-Cu alloys, Ti(N, C) carbonitrides, CaO-CaS type, MgO-MgS type, CaO-MgO-CaS-MgS type oxysulfides, and MgO·Al_2O_3 oxides type inclusions can be mentioned depending on concentration of each component and slug composition. Here, a non-metallic inclusion is a general term for oxides, sulfides, and carbonitrides that are generated in the molten alloy from the secondary refining process to the casting process, and most of them are present in the mother alloy dispersed in sizes ranging from a few $\mu$m to a few tens of $\mu$m after solidification.

Ti(N, C) is a solid solution, and inside of brackets indicates that N and C exist while substituting each other in crystal structure. Regardless of the atomic ratio of C and N in Ti(N,C), it has a tendency to adhere to the inner wall of the nozzle and to easily aggregate and combine.

Furthermore, in a method of expressing composition of oxysulfides type inclusions, one which is expressed connected with "-" indicates that it becomes a solid solution at a refining temperature higher than 1600°C and it is composed of fine CaO, MgO, CaS, and MgS dispersed over a wide range of components referring to the phase diagram during casting.

In MgO·Al$_2$O$_3$ oxides type inclusions, it is expressed by connecting with "·", this indicates to form intermediate compounds. MgO·Al$_2$O$_3$ has range of solid solution about MgO: 10 to 40% and Al$_2$O$_3$: 60 to 90%, is hard, and has property easily combining and aggregating in molten alloy.

As mentioned above, since Ti(N, C) and MgO·Al$_2$O$_3$ are the inclusions which cause surface defects by aggregating, combining, and forming clusters, it is desired to prevent generating. In particular, since Ti(N, C) may adhere and deposit on the inner wall of the nozzle during casting, fall off as large clusters, and cause large number of surface defects, it is very important to prevent generating. With respect to CaO-CaS type, MgO-MgS type, CaO-MgO-CaS-MgS type oxysulfides, since they do not have properties to aggregate and combine regardless of the composition range of CaO, MgO, CaS, and MgS, they do not form clusters or cause surface defects. Since these oxysulfides type inclusions are generated by reaction of CaO, MgO and CaO-MgO oxides which are generated during deoxidation and S in molten alloy, they also have a role to absorb and fix harmful S in molten alloy. Therefore, it is desirable that non-metallic inclusions in Ni-Cu alloy is one kind or more selected from CaO-CaS type, MgO-MgS type, CaO-MgO-CaS-MgS type oxysulfides. However, since amount of griding after hot rolling may be larger if ratio of the above three kind inclusions with respect to the entire of the non-metallic inclusions is less than 85% in number ratio, it is desirable that the number ratio is not less than 85%.

Next, the production method of the Ni-Cu alloy of the present invention is explained. The following production method is a desirable embodiment.

Upon production of Ni-Cu alloy, first, raw materials are melted in an electric furnace so as to prepare molten Ni-Cu alloy having a predetermined composition. The raw materials are pure nickel, pure copper, Ni-Cu alloy scrap, iron scrap, stainless steel scrap, ferronickel, ferromanganese and the like. Next, in the secondary refining, oxygen blowing, that is, oxidation refining is performed in AOD (Argon Oxygen Decarburization) and/or VOD (Vacuum Oxygen Decarburization). During this, together with decarburization reaction in which C mixed in from the raw materials is removed, denitrogenation reaction in which N mixed in from the atmosphere is removed, is promoted, so that the C and N concentrations can be controlled. Then, Ti is added to satisfy the above-mentioned formula (6).

After that, lime, fluorite, Si and/or Al are added so that CaO-Al$_2$O$_3$-SiO$_2$-MgO-F type slag having slag composition of CaO: 50 to 75%, Al$_2$O$_3$: 5 to 25%, SiO$_2$: 1 to 10%, MgO: 2 to 15%, F: 1 to 15%, in mass%, is prepared. While stirring using this slag and blowing gas such as Ar, deoxidation and desulfurization are performed so as to control the O and S concentrations. Here, formation of molten slag and control of concentration are explained. CaO is controlled by adding lime and fluorite, Al$_2$O$_3$ is controlled by adding Al and Al$_2$O$_3$ powder. SiO$_2$ is controlled by Si addition and SiO$_2$ contained in fluorite. MgO is added at an appropriate amount due to erosion of MgO-type refractories (dolomite, MgO-C, magnesia chrome bricks) used for lining in AOD and VOD to the slag. Alternatively, in order to prevent excessive erosion and to control concentration, MgO-type recycle brick can be added. F is controlled by adding fluorite.

Furthermore, temperature and concentrations of components are precisely adjusted in a ladle refining performed after that. Finally, a slab or an ingot is produced by continuous casting or conventional ingot casting. Hot forging is performed in the case of ingot, and hot rolling is performed to produce Ni-Cu alloy plate.

Here, reasons for limiting chemical components of slag composition mentioned above are explained. It should be noted that % hereinafter indicates mass%.

CaO: 50 to 75%

CaO is a slag component essential for desulfurizing. If it is less than 50%, desulfurizing reaction may not be promoted since high CaO activity cannot be obtained, and the S concentration in alloy may be high being greater than 0.002%. On the other hand, if it is greater than 75%, large amount of CaO solid having melting point higher than 2500°C may be crystallized out of molten slag, viscosity of slag may be extremely increased, flowability may be deteriorated, desulfurization and deoxidation reactions may not be promoted, and the S concentration may be high being greater than 0.002%.

Al$_2$O$_3$: 5 to 25%

Al$_2$O$_3$ is a necessary component in order to control the Al concentration in molten alloy and form molten slag by lowering melting point of the slag. If it is added greater than 25%, it may combine Mg and O in molten alloy, and may form $MgO \cdot Al_2O_3$ inclusion causing surface defects. On the other hand, if it is less than 5%, deoxidation may be excessively promoted, the Mg concentration may be high being greater than 0.04%, and the Ca concentration may also be high being greater than 0.04%. Therefore, it is limited to be 5 to 25%.

$SiO_2$: 1 to 10%

$SiO_2$ is a necessary component in order to control the Si concentration in molten alloy and form molten slag by lowering melting point of the slag. If it is added greater than 10%, it may act as an oxidizing agent for molten alloy, deoxidation and desulfurization may be inhibited, the oxygen concentration may exceed 0.005%, and the S concentration may be high being greater than 0.002%. On the other hand, if it is too small being less than 1%, deoxidation may be excessively promoted, the Mg concentration may be high being greater than 0.04%, and the Ca concentration may also be high being greater than 0.04%. Therefore, it is limited to 1 to 10%.

MgO: 2 to 15%

MgO is an effective component in order to generate MgO-MgS type, CaO-MgO-CaS-MgS type inclusions and form molten slag by lowering melting point of the slag. If it is added excessively, it may combine Al and O in molten alloy and $MgO \cdot Al_2O_3$ inclusion causing surface defects may be formed. If it is too small amount, melting point of the slag may be high and molten slag cannot be formed, and desulfurization and deoxidation reactions may not be promoted. Therefore, it is limited to 2 to 15%.

F: 1 to 15%

F has an effect in which during performing slag refining, viscosity of molten slag is decreased and flowability is increased thereby increase reaction rates of desulfurization and deoxidation. If the concentration is less than 1%, flowability cannot be maintained high and desulfurization and deoxidation reactions may not be promoted. On the other hand, if the concentration is greater than 15%, flowability may be too high, refractories may be eroded severely and operation cost may be increased. Therefore, it is limited to 1 to 15%.

Example

Next, Examples will be presented to clarify the configuration and effects of the present invention; however, the present invention is not limited to the following Examples. Pure nickel, pure copper, Ni-Cu alloy scrap, iron scrap, stainless steel scrap, ferronickel, ferromanganese and the like were melted by an electric furnace having melting weight of 60 t. After that, in the secondary refining, oxygen was blown to perform decarburization and denitrogenation in order to control the C and N concentrations within predetermined concentrations in AOD or VOD. After that, concentration of component thereof was confirmed and Ti was added. Lime, fluorite, Si and/or Al were added in order to generate CaO-Al_2O_3-SiO_2-MgO-F type slag, and Ar gas was blown thereinto to stir and perform deoxidation and desulfurization. Then, samples of molten alloy and slag were collected therefrom, and concentration of components were confirmed. It should be noted that in AOD and VOD, MgO type refractories (dolomite, MgO-C, magnesia chrome brick) were lined. After the secondary refining, temperature and chemical components were adjusted in the ladle, a slab having thickness of 200 mm or ingot was produced by continuous casting (CC) or conventional ingot casting (IC). The ingot was hot-forged in order to form slab. After grinding surface of the slab produced, hot rolling was performed so as to produce alloy plate having width of 1200 mm and thickness of 2 mm. In a similar manner, alloy plates of Examples 1 to 7 and Comparative Examples 8 to 15 were produced.

Table 1

| | | Ni-Cu alloy composition (mass%) | | | | | | | | | | | | | | [%Ti] × ([%N] +1/100 × [%C]) |
|---|---|---|---|---|---|---|---|---|---|---|---|---|---|---|---|---|---|
| | | C | Si | Mn | P | S | Cr | Ni | Cu | Al | Ti | Fe | Mg | Ca | N | O | |
| Examples | 1 | 0.11 | 0.10 | 1.26 | 0.010 | 0.0010 | 0.05 | 61.03 | 34.25 | 0.08 | 0.148 | 2.32 | 0.0146 | 0.0052 | 0.0005 | 0.0033 | 0.0002 |
| | 2 | 0.12 | 0.30 | 0.89 | 0.018 | 0.0015 | 0.14 | 66.47 | 28.51 | 0.02 | 0.055 | 2.95 | 0.0087 | 0.0009 | 0.0010 | 0.0045 | 0.0001 |
| | 3 | 0.15 | 0.46 | 1.82 | 0.014 | 0.0003 | 0.23 | 56.37 | 39.08 | 0.29 | 0.028 | 1.22 | 0.0258 | 0.0144 | 0.0052 | 0.0010 | 0.0002 |
| | 4 | 0.19 | 0.03 | 0.55 | 0.008 | 0.0002 | 0.01 | 65.20 | 32.12 | 0.48 | 0.014 | 0.98 | 0.0389 | 0.0367 | 0.0092 | 0.0004 | 0.0002 |
| | 5 | 0.04 | 0.12 | 0.05 | 0.024 | 0.0011 | 0.96 | 65.11 | 30.50 | 0.05 | 0.383 | 2.45 | 0.0052 | 0.0008 | 0.0001 | 0.0014 | 0.0002 |
| | 6 | 0.09 | 0.28 | 1.03 | 0.027 | 0.0007 | 0.44 | 60.21 | 36.76 | 0.05 | 0.063 | 0.67 | 0.0392 | 0.0354 | 0.0030 | 0.0008 | 0.0002 |
| | 7 | 0.03 | 0.07 | 1.12 | 0.005 | 0.0006 | 0.71 | 64.33 | 31.09 | 0.11 | 0.240 | 1.87 | 0.0055 | 0.0022 | 0.0006 | 0.0039 | 0.0002 |
| Comparative Examples | 8 | 0.08 | 0.09 | 1.45 | 0.021 | 0.0016 | 0.04 | 59.12 | 36.83 | 0.09 | 0.289 | 1.56 | 0.0151 | 0.0019 | 0.0060 | 0.0034 | [0.0020] |
| | 9 | 0.05 | 0.22 | 0.21 | 0.009 | 0.0012 | 0.12 | 67.88 | 29.77 | 0.11 | 0.356 | 0.55 | 0.0206 | 0.0010 | 0.0011 | 0.0018 | [0.0006] |
| | 10 | 0.19 | 0.34 | 1.95 | 0.018 | 0.0002 | 0.56 | 60.30 | 33.59 | 0.47 | 0.112 | 1.92 | 0.0378 | 0.0264 | 0.0017 | 0.0005 | [0.0004] |
| | 11 | 0.15 | 0.11 | 0.78 | 0.012 | 0.0005 | 0.09 | 68.09 | 28.22 | 0.32 | 0.039 | 2.02 | 0.0111 | 0.0076 | 0.0094 | 0.0009 | [0.0004] |
| | 12 | 0.12 | 0.42 | 1.02 | 0.006 | 0.0006 | 0.16 | 58.55 | 37.98 | 0.26 | 0.058 | 1.33 | 0.0099 | 0.0128 | 0.0071 | 0.0019 | [0.0005] |
| | 13 | 0.03 | 0.19 | 1.22 | 0.026 | 0.0011 | 0.32 | 58.55 | 35.98 | 0.07 | [0.414] | 2.92 | 0.0078 | 0.0021 | 0.0002 | 0.0042 | 0.0002 |
| | 14 | 0.12 | 0.22 | 0.90 | 0.015 | 0.0009 | 0.21 | 65.79 | 30.55 | 0.09 | 0.015 | 1.66 | 0.0083 | 0.0038 | [0.0114] | 0.0035 | 0.0002 |
| | 15 | [0.23] | 0.27 | 1.24 | 0.009 | 0.0006 | 0.18 | 64.99 | 30.92 | 0.06 | 0.014 | 1.54 | 0.0075 | 0.0029 | 0.0098 | 0.0037 | 0.0002 |

Table 2

| | | Secondary refining | Casting | Slag composition (mass%) | | | | | Number ratio % of inclusion kinds (Measured at 20 points by EDS) | | | | | Surface properties |
|---|---|---|---|---|---|---|---|---|---|---|---|---|---|---|
| | | | | CaO | $Al_2O_3$ | $SiO_2$ | MgO | F | CaO-CaS type | MgO-MgS type | CaO-MgO-CaS-MgS type | Ti(N,C) | $MgO \cdot Al_2O_3$ | |
| Examples | 1 | AOD | CC | 69.5 | 16.0 | 1.4 | 8.1 | 4.5 | 40 | 25 | 35 | 0 | 0 | ○ |
| | 2 | AOD | CC | 68.2 | 19.3 | 8.5 | 2.5 | 1.3 | 0 | 25 | 75 | 0 | 0 | ○ |
| | 3 | AOD | CC | 63.5 | 6.9 | 9.5 | 5.2 | 14.6 | 25 | 25 | 50 | 0 | 0 | ○ |
| | 4 | VOD | IC | 73.9 | 5.5 | 1.4 | 10.1 | 8.2 | 50 | 50 | 0 | 0 | 0 | ○ |
| | 5 | AOD | CC | 52.1 | 24.2 | 5.5 | 14.6 | 3.4 | 30 | 0 | 70 | 0 | 0 | ○ |
| | 6 | AOD | CC | 57.2 | [25.4] | 3.9 | 7.2 | 5.1 | 40 | 15 | 35 | 0 | 10 | △ |
| | 7 | AOD | CC | 52.2 | 19.5 | 8.3 | [15.9] | 2.1 | 25 | 10 | 50 | 0 | 15 | △ |
| Compara tive Examples | 8 | AOD | CC | 66.7 | 10.8 | 5.5 | 6.4 | 10.3 | 15 | 10 | 25 | 50 | 0 | × |
| | 9 | AOD | CC | 60.8 | 11.7 | 6.0 | 5.4 | 14.5 | 30 | 10 | 25 | 35 | 0 | × |
| | 10 | AOD | CC | 70.8 | 6.6 | 3.6 | 11.6 | 6.8 | 25 | 15 | 40 | 20 | 0 | × |
| | 11 | VOD | IC | 59.8 | 10.9 | 6.5 | 5.5 | 14.3 | 20 | 20 | 45 | 15 | 0 | × |
| | 12 | AOD | CC | 52.4 | [26.1] | 2.4 | [16.4] | 1.9 | 20 | 5 | 30 | 20 | 25 | × |
| | 13 | AOD | CC | 61.5 | 17.4 | 5.5 | 7.1 | 8.2 | 25 | 30 | 45 | 0 | 0 | × |
| | 14 | AOD | CC | 64.2 | 20.8 | 5.6 | 6.1 | 2.9 | 35 | 20 | 45 | 0 | 0 | Stop rolling |
| | 15 | AOD | CC | 59.3 | 17.1 | 8.4 | 8.9 | 4.8 | 30 | 20 | 50 | 0 | 0 | × |

Chemical components which are shown in Table 1, slag composition, number ratio of kind of inclusions and evalution regarding surface defects of alloy plate which are shown in Table 2 were obtained as follows.

(1) Chemical components of alloy and slag composition: Quantitative analysis was performed using an X-ray fluorescence analyzer. The concentrations of C, S, and O in the alloy were quantitatively analyzed by inert gas fusion-non-dispersive infrared absorption method, and the N concentration in the alloy was quantitatively analyzed by inert gas fusion-thermal conductivity method. The total concentration of the alloy is less than 100% because inevitable impurities are contained as the remainder. The total concentration of the slag is less than 100% because impurities such as FeO and S are contained slightly as the remainder.

(2) Analysis of non-metallic inclusions: After starting casting, samples of molten alloy were collected from the tundish in the case of CC and from the ladle in the case of IC and analyzed. Using SEM-EDS, twenty random non-metallic inclusions with a size of 5 $\mu$m or more were measured, and number ratio % of each type of inclusions was calculated. The type of inclusions which were detected were Ti(N, C), CaO-CaS type, MgO-MgS type, CaO-MgO-CaS-MgS type oxysulfides, and $MgO \cdot Al_2O_3$. However, Ti(N, C) was not observed in Examples of the present invention.

(3) Evaluation of surface defects: The surface of the alloy plate of a length of 100 m in the rolling direction was photographed with an automatic inspection camera to detect surface defects, and the surface defects were then visually inspected and the number of linear surface defects having a length not less than 50 mm was counted.

o: No defects were detected.

$\Delta$: Four defects or less were detected.

x: Five defects or more were detected.

Results of Examples and Comparative Examples are shown in Tables 1 and 2. A value in brackets [ ] in Table indicates that the value is out of the range of the present invention. Among these, samples of Nos. 4 and 11 were refined in VOD and casted by conventional ingot casting. Furthermore, in Fig. 1, the vertical axis is [%Ti], the horizontal axis is ([%N] +1/100 x [%C]), the curve shows concentration curve where [%Ti] x ([N] +1/100 [%C]) = 0.0003, and results of surface qualities in Examples and Comparative Examples were plotted. It should be noted that dotted line indicates the upper limit and the lower limit of the specified range of the Ti concentration.

Since Examples Nos. 1 to 5 satisfied all of the ranges of the present invention, surface quality was superior having no surface defects and evaluation was "o".

In Example No. 6, generation of Ti(N, C) was not confirmed; however, since the $Al_2O_3$ concentration in slag in the secondary refining was higher than the specified range, $MgO \cdot Al_2O_3$ inclusion was formed at a number ratio of 10%, resulting in surface defects. However, the surface defects that occurred were considered to be slight and could be removed by grinding within the allowable range of production cost, and the evaluation was "$\Delta$".

In Example No. 7, since although generation of Ti(N, C) was not confirmed, the MgO concentration in slag in the secondary refining was higher than the specified range, $MgO \cdot Al_2O_3$ inclusion was formed at a number ratio of 15%, resulting in surface defects. However, quality was almost as same as that of No. 6 and the evaluation was "$\Delta$".

In Comparative Examples 8 to 11, value of [%Ti] x ([%N] +1/100 x [%C]) was high being greater than 0.0003, and Ti(N, C) was generated. The number of surface defects occurred by clusters which were adhered and deposited on the inner wall of the nozzle during casting and fell off, were unacceptable, and the evaluation was "x".

In Comparative Example 12, value of [%Ti] x ([%N] +1/100 x [%C]) was high being greater than 0.0003, and Ti(N, C) was generated. Furthermore, since the concentrations of $Al_2O_3$ and MgO in slag composition were greater than the specified range, $MgO \cdot Al_2O_3$ was also generated, the number of surface defects occurred was unacceptable, and the evaluation was "x".

In Comparative Example 13, since value of [%Ti] x ([%N] +1/100 x [%C]) was less than 0.0003 and slag composition was within the specified range, generation of Ti(N, C) and $MgO \cdot Al_2O_3$ was not confirmed. However, since Ti was excessively added at an amount greater than the specified range, a vertical crack occurred along the entire length of the slab during casting. The surface of the slab was grinded while greatly deteriorating the yield, and the slab progressed to hot rolling process. However, residual vertical cracks that could not be completely removed by grinding resulted in numerous unacceptable surface defects, and the evaluation was "x".

In Comparative Example No. 14, since value of [%Ti] x ([%N] +1/100 x [%C]) was less than 0.0003 and the slag composition was within the specified range, generation of Ti(N, C) and $MgO \cdot Al_2O_3$ was not confirmed. However, since denitrogenation could not be proceeded sufficiently in the secondary refining, the N concentration was greater than the specified range and numerous blowhole defects occurred along the entire length of the slab. After the surface of the slab was grinded, the slab progressed to hot rolling process. However, numerous blowhole defects occurred inside of the slab, rolling cracks occurred from the blowhole defects as an origin point over the entire surface, and the rolling was abandoned.

In Comparative Example No. 15, since value of [%Ti] x ([%N] +1/100 x [%C]) was less than 0.0003 and the slag composition was within the specified range, generation of Ti(N, C) and $MgO \cdot Al_2O_3$ was not confirmed. However, composition adjustment failed before casting process, the C concentration was greater than the specified range, and a vertical crack occurred along the entire length of the slab during casting. The surface of the slab was grinded while greatly deteriorating the yield, and the slab progressed to hot rolling process. However, residual vertical cracks that could not be completely removed by grinding resulted in numerous unacceptable surface defects, and the evaluation was "x".

**Claims**

1. Ni-Cu alloy consisting of:
   in mass%, C: 0.01 to 0.20%, Si: 0.01 to 0.5%, Mn: 0.01 to 2%, P: not greater than 0.03%, Cu: 28 to 40%, Cr: 0.01 to 1%, Fe: 0.3 to 3%, Al: 0.01 to 0.5%, Ti: 0.01 to 0.40%, N: not greater than 0.010%, Mg: 0.005 to 0.04%, Ca: 0.0005 to 0.04%, O: 0.0003 to 0.005%, S: 0.0001 to 0.002%, Ni and inevitable impurities as a remainder, and mass concentrations of Ti, N and C satisfy the following formula.

$$[\%Ti] \times ([\%N] + 1/100 \times [\%C]) < 0.0003$$

2. The Ni-Cu alloy according to claim 1, wherein ratio of non-metallic inclusions of at least one kind selected from CaO-CaS type, MgO-MgS type, CaO-MgO-CaS-MgS type oxysulfides occupying with respect to the entire of non-metallic inclusions contained in the Ni-Cu alloy is not less than 85% in number ratio.

3. A method for production of the Ni-Cu alloy according to claim 1 or 2, comprising steps of:

   melting raw materials in an electric furnace,
   blowing oxygen in AOD and/or VOD in secondary refining so as to control C and N concentrations,
   adding Ti,
   adding lime, fluorite, Si and/or Al so as to generate CaO-Al$_2$O$_3$-SiO$_2$-MgO-F type slag having slag composition of, in mass%, CaO: 50 to 75%, Al$_2$O$_3$: 5 to 25%, SiO$_2$: 1 to 10%, MgO: 2 to 15%, F: 1 to 15%,
   performing deoxidation and desulfurization with stirring using the slag so as to control O and S concentrations,
   producing slab or ingot by continuous casting or conventional ingot casting,
   forming slab by hot forging in a case in which ingot is produced, and
   performing hot rolling.

Fig. 1

## INTERNATIONAL SEARCH REPORT

| International application No. |
|---|
| **PCT/JP2023/039670** |

| A. | CLASSIFICATION OF SUBJECT MATTER |
|---|---|

***C22C 19/05***(2006.01)i; ***C22C 1/02***(2006.01)i; ***C22F 1/00***(2006.01)i; ***C22F 1/10***(2006.01)i
FI: C22C19/05 K; C22F1/10 H; C22C1/02 503G; C22F1/00 613; C22F1/00 623; C22F1/00 640A; C22F1/00 651A; C22F1/00 673; C22F1/00 681; C22F1/00 683

According to International Patent Classification (IPC) or to both national classification and IPC

| B. | FIELDS SEARCHED |
|---|---|

Minimum documentation searched (classification system followed by classification symbols)

C22C19/05; C22C1/02; C22F1/00; C22F1/10

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | JP 3-236434 A (MITSUI ENG. & SHIPBUILD. COMPANY, LIMITED; METAL RES. CORP. KABUSHIKI KAISHA) 22 October 1991 (1991-10-22) | 1-3 |
| A | JP 6-304701 A (THE FURUKAWA ELECTRIC COMPANY, LIMITED) 01 November 1994 (1994-11-01) | 1-3 |
| A | JP 2005-023346 A (NIPPON YAKIN KOGYO COMPANY, LIMITED) 27 January 2005 (2005-01-27) | 1-3 |
| A | CN 108034859 A (NINGBO DAHONGYING UNIVERSITY) 15 May 2018 (2018-05-15) | 1-3 |
| P, A | JP 7190607 B1 (NIPPON YAKIN KOGYO COMPANY, LIMITED) 15 December 2022 (2022-12-15) | 1-3 |

☐ Further documents are listed in the continuation of Box C.  ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **15 January 2024** | **23 January 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## INTERNATIONAL SEARCH REPORT
### Information on patent family members

International application No.

**PCT/JP2023/039670**

| Patent document cited in search report | | | Publication date (day/month/year) | Patent family member(s) | Publication date (day/month/year) |
|---|---|---|---|---|---|
| JP | 3-236434 | A | 22 October 1991 | (Family: none) | |
| JP | 6-304701 | A | 01 November 1994 | (Family: none) | |
| JP | 2005-023346 | A | 27 January 2005 | (Family: none) | |
| CN | 108034859 | A | 15 May 2018 | (Family: none) | |
| JP | 7190607 | B1 | 15 December 2022 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6937190 B
- JP 2003147492 A
- JP 4542079 B
- JP 6791711 B
- JP 7015410 B
- JP 6990337 B
- JP HEISEI81996120375 A
- JP 2009114544 A

**Non-patent literature cited in the description**

- THERMODYNAMIC DATA FOR STEEL MAKING. Japan Society for the Promotion of Science, the 19th Committee on Steelmaking. Tohoku University Press, 2010